# FASCICULE DE BREVET EUROPEEN

(11) **EP 2 593 498 B1**
(45) Date de publication et mention de la délivrance du brevet: **30.04.2014**
(21) Numéro de dépôt: 11749869.1
(22) Date de dépôt: 11.07.2011
(51) Int. Cl.: C08H 1/00, C08H 1/02, C08H 1/04, C08L 89/00, C08L 89/02, C08L 97/02

(54) **PROCÉDÉ POUR L'ÉLABORATION D'UN POLYMÈRE THERMODURCISSABLE ET UN TEL POLYMÈRE THERMODURCISSABLE**
VERFAHREN ZUR HERSTELLUNG EINES WÄRMEHÄRTENDEN POLYMERS UND DERARTIGES WÄRMEHÄRTENDES POLYMER
METHOD FOR PRODUCING A THERMOSETTING POLYMER, AND SUCH THERMOSETTING POLYMER

(30) Priorité: 13.07.2010 FR 1002946
(43) Date de publication de la demande: 22.05.2013
(73) Titulaire: Université de Picardie Jules Verne, 80025 Amiens Cedex (FR)
(72) Inventeur: QUENEUDEC-T'KINT, Michèle, F-80025 Amiens Cedex (FR); HOUESSOU KOFFI, Justin, F-80025 Amiens Cedex (FR); MONTRELAY, Nicolas, F-80025 Amiens Cedex (FR)
(74) Mandataire: Schreiber, Ina
(86) Numéro de dépôt international: PCT/FR2011/000408
(87) Numéro de publication internationale: WO 2012/007656

(56) Documents cités:
- WO-A1-2007/104323
- BE-A- 343 473
- US-A- 2 309 380

## Description

L'invention concerne un procédé pour l'élaboration d'un agropolymère thermodurcissable ainsi qu'un tel polymère thermodurcissable.

Ce polymère trouve une application particulière comme liant et peut servir à l'élaboration d'agrocomposites.

La présente invention peut permettre la valorisation de matières premières telles que l'hémoglobine, notamment issue de l'abattage d'animaux, de la caséine, notamment issue du lait ou encore extraite à partir de tourteaux ou de graines oléagineuses, ou encore de la gélatine protéine animale extraite après l'hydrolyse de matières premières riches en collagène. Ces matières premières accessibles en abondance ne sont aujourd'hui pas entièrement valorisées.

On trouve sur le marché de l'hémoglobine sous forme de poudre obtenue par atomisation de sang recueilli lors de l'abattage d'animaux. Les quantités recueillies annuellement sont importantes mais ne sont pas totalement traitées. Il est déjà connu de l'état de la technique d'utiliser l'hémoglobine ou le sang pour l'élaboration de matériaux.

Par exemple, le document DE-591.540 fait état d'un procédé pour la fabrication de matières artificielles à partir de protéines telles que l'albumine, le sang, la kératine ou de colle, résines, gommes ou huiles oxydables utilisées comme liants. Ces liants sont mélangés avec du limon et de l'eau salée ou sucrée. Les mélanges sont mis en forme par compression sous traitement thermique, et si besoin sont durcis par du formaldéhyde sous forme gazeuse ou en solution. On ajoute aux matières de la pâte de bois, des dérivés de cellulose, des composés borés, du soufre ou de la suie. On ajoute de la vase ou des métaux lourds extraits de la vase ou leur combinaison. On laisse les matières évoluer un certain temps ; on peut faire cette maturation sous vide et si nécessaire en chauffant jusqu'à séchage complet.

On connaît également du document FR-2.850.374 un procédé de fabrication d'un matériau composite à base de ciment et de poudre de caoutchouc, par moussage protéinique. De l'hémoglobine bovine peut être utilisée comme agent moussant.

On connaît également du document FR-2.935.375 l'utilisation de l'hémoglobine en poudre pour l'obtention d'un liant. Le liant peut être obtenu en mélangeant de l'hémoglobine en poudre avec du vinaigre ou une autre solution d'acide acétique. Le liant est obtenu par une réaction entre l'hémoglobine et l'acide, conduisant à la formation d'une liaison de type amine substituée avec élimination d'une molécule d'eau. L'ensemble est ensuite soumis à un traitement thermique modéré plus particulièrement à des températures de l'ordre de 70 à 90°.

La caséine est une protéine que l'on trouve également en abondance et qui renferme notamment du calcium et de l'acide phosphorique, la caséine peut être issue du lait. On attribue également le terme de caséine végétale à une substance azotée extraite des tourteaux, résidus de graines oléagineuses après extraction d'huile.

L'usage de la caséine pure ou associée à la chaux dans des peintures ou badigeons est déjà connu.

L'ajout de chaux a pour objectif essentiellement la diminution du coût. On signale également le rôle de pré-solvant de la chaux pour la caséine brute à l'instar de l'ammoniaque, le carbonate d'ammonium, le borax, la potasse. L'emploi d'acides purs et notamment d'acide acétique non dilué en tant que pré-solvant est également signalé.

Le document FR-2.935.375 précité fait état dudit procédé de fabrication d'un liant dans lequel on mélange l'hémoglobine avec un acide. Selon ce procédé, l'hémoglobine peut être remplacée par de la caséine.

La gélatine est une protéine animale extraite après hydrolyse de matières premières riches en collagène. Suivant le type d'hydrolyse, milieu acide ou milieu alcalin, on obtient les gélatines de type A ou B. Quel que soit le type d'hydrolyse, la gélatine est ensuite extraite à l'eau chaude. Elle possède des propriétés gélifiantes, épaississantes, émulsifiantes, moussantes. Elle peut être utilisée pour floculer des particules colloïdales. Elle devient insoluble dans l'eau sous l'action du formaldéhyde. Le bichromate de potassium durcit la gélatine quand elle est exposée à la lumière UV et elle devient insoluble dans l'eau.

On connaît du document FR-02/00714 un procédé d'obtention d'un agromatériau à partir de gélatine. Il consiste à mélanger la gélatine à un composé pectique issu du végétal et à un solvant (eau, glycérol, éthanol....) et à soumettre le traitement à un traitement par microonde. Le mélange peut contenir également un agent d'hydrophobisation et peut être encore coloré. Le mélange peut être additionné de charges minérales ou végétales avant durcissement et peut également être renforcé par des fibres végétales ou non.

Le but de la présente invention est de proposer un procédé pour l'élaboration d'un agropolymère thermodurcissable dont les performances mécaniques sont améliorées.

Un autre but de la présente invention est de proposer un procédé pour l'élaboration d'un agropolymère qui peut être obtenu à partir de matières premières telles que la caséine, l'hémoglobine ou encore la gélatine.

D'autres buts et avantages de la présente invention apparaîtront au cours de la description qui va suivre qui n'est donnée qu'à titre indicatif et qui n'a pas pour but de la limiter.

Aussi, l'invention concerne un procédé pour l'élaboration d'un agropolymère thermodurcissable dans lequel au moins :
- on mélange une protéine en poudre, un alcool aliphatique de formule R'OH et un aldéhyde de formule RCOH en milieu acide, R et R' étant indépendamment choisis parmi les radicaux alkyles, plus particulièrement parmi les radicaux alkyles en C1 à C4, tels que CH₃-, CH₃-CH₂-, CH₃-CH₂-CH₂- , CH3-CH₂-CH₂-CH₂-, (CH₃)₂CH-, et (CH₃)₂CH-CH₂- ;
- on thermocompresse le mélange afin d'estérifier la ou les fonction(s) acide carboxylique terminale(s) de la protéine et de transformer la ou les fonction(s) amine terminale(s) de la protéine en imine.

On entend par le terme protéine tel qu'il est utilisé ici les protéines constituées d'une seule chaîne protéinique ainsi que les protéines constituées de plusieurs chaînes protéiniques. Un exemple d'une protéine constituée de plusieurs chaînes protéiques est l'hémoglobine qui est en effet un tétramère constitué de deux chaînes α et de deux chaînes β*. Ainsi, dans le cas d'une protéine constituée de plusieurs chaînes protéiniques, les modifications sont effectuées sur toutes les fonctions amine et acide carboxylique terminales.

La formule (I) ci-après illustre les modifications au niveau des fonctions terminales d'une chaîne protéinique obtenues lors de la mise en oeuvre du procédé selon l'invention : 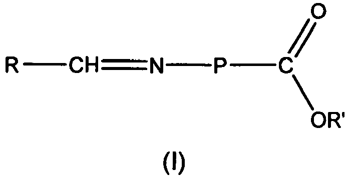 dans lequel :
P est ladite chaîne protéinique sans fonctions terminales,
R et R' sont indépendamment choisis parmi les radicaux alkyles, plus particulièrement parmi les radicaux alkyles en C1 à C4, tels que CH₃-, CH₃-CH₂-, CH₃-CH₂-CH₂-, CH3-CH₂-CH₂-CH₂-, (CH₃)₂CH-, et (CH₃)₂CH-CH₂-.

Sans être liés par une quelconque théorie les présents inventeurs pensent que les modifications des fonctions terminales de la protéine peuvent induire un réarrangement de la ou des chaîne(s) protéinique(s) dans l'espace. Il n'est également pas exclu que certaines chaînes latérales de la protéine réagissent avec l'alcool et/ou l'aldéhyde lors de la mise en oeuvre du procédé de l'invention.

L'agropolymère obtenu selon le procédé de l'invention est un matériau thermodur. Il résiste au feu, et aux agents chimiques (alcool, acétone notamment). Les matériaux obtenus peuvent subir des traitements mécaniques après durcissement (sciage, fraisage).

Selon des caractéristiques optionnelles prises seules ou en combinaison ;
- la protéine est choisie parmi l'hémoglobine, la caséine ou encore la gélatine, de préférence la protéine est l'hémoglobine ;
- l'alcool aliphatique est choisi parmi l'éthanol, le propanol, le 2-propanol, le butanol, ou tout autre alcool aliphatique ramifié ou non, de préférence l'alcool aliphatique est de l'éthanol;
- l'aldéhyde aliphatique est choisi parmi l'aldéhyde acétique, le propanal, butanal ou tout autre aldéhyde aliphatique, de préférence l'aldéhyde aliphatique est de l'aldéhyde acétique ;
- on mélange d'abord la protéine avec l'alcool, puis on ajoute l'aldéhyde, ou alternativement,
- on mélange d'abord la protéine avec l'aldéhyde, puis on ajoute l'alcool ;
- la thermocompression est réalisée à une température comprise entre 60 et 80°C, telle que 70°C ;
- la thermocompression est réalisée à une pression comprise entre 50 bars et 150 bars, telle que par exemple 100 bars ;
- la durée de l'étape de thermocompression est comprise entre 1 et 10 min, notamment entre 2 et 6 min;
- le procédé présente une étape supplémentaire dans laquelle on ajoute au mélange une charge minérale ou végétale, avant thermocompression du mélange ;
- la charge végétale peut être lignocellulosique, choisie dans le groupe des coproduits céréaliers, des produits de défibrage du lin ou du chanvre, des pulpes de betteraves, produits issus de l'exploitation forestière,
- les proportions en masse dans le mélange (protéine, alcool, aldéhyde) sont :
   - protéine entre 60% et 80%, notamment 70%,
   - alcool entre 10% et 20%, notamment 15%,
   - aldéhyde entre 10% et 20%, notamment 15%.

L'invention concerne également un agropolymère thermodurcissable obtenu selon le procédé conforme à l'invention.

Le procédé conforme à l'invention et le polymère trouvent une application particulière dans le domaine de la construction, du transport, de l'emballage, de l'électronique, de l'ameublement et du jouet.

L'invention sera mieux comprise à la lecture de la description suivante accompagnée des dessins en annexe parmi lesquels :
- la figure 1 est un tableau représentatif des caractéristiques physicomécaniques des différentes formulations thermocompressées à 70°C pendant 6 minutes, les essais de tractions réalisés 5 jours après la thermocompression
- la figure 2 est un tableau représentatif des caractéristiques physicomécaniques des différentes formulations thermocompressées à 70°C pendant 6 minutes, les essais de traction réalisés 83 jours après la thermocompression,
- la figure 3 est un tableau représentatif de l'influence des fibres végétales comparées à la fibre de verre,
- la figure 4 est représentative d'un tableau représentatif de l'effet de vieillissement du matériau.

Aussi, l'invention concerne un procédé pour l'élaboration d'un agropolymère thermodurcissable notamment agropolymère dans lequel au moins :
- on mélange une protéine en poudre à un alcool aliphatique de formule R'OH et un aldéhyde de formule RCOH en milieu acide, R et R' étant indépendamment choisis parmi les radicaux alkyles, plus particulièrement parmi les radicaux alkyles en C1 à C4, de préférence parmi CH₃-, CH₃-CH₂-, CH₃-CH₂-CH₂-, CH3-CH₂-CH₂-CH₂-, (CH₃)₂CH-, et (CH₃)₂CH-CH₂- ;
- on thermocompresse le mélange afin d'estérifier la ou les fonction(s) acide carboxylique terminale(s) de la protéine et de transformer la ou les fonction(s) amine terminale(s) de la protéine en imine. Selon une variante du procédé de l'invention, l'alcool est l'éthanol et l'aldéhyde est l'aldéhyde acétique (éthanal). R est alors CH₃ et R' est CH₂-CH₃. On obtient donc un dérivé de formule (la) 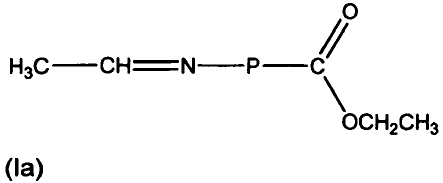
Selon un premier mode de réalisation, la protéine est l'hémoglobine, l'alcool est l'éthanol et l'aldéhyde est l'aldéhyde acétique (éthanal). R est alors CH₃ et R' est CH₂-CH₃. Comme indiqué plus haut les modifications chimiques sont effectuées sur chacune des quatre chaînes protéiniques de l'hémoglobine.

De manière générale, le mélange peut être rendu acide par l'ajout d'acides, notamment d'acides minéraux tels que par exemple de l'acide sulfurique.
L'acide joue le rôle de catalyseur et favorise une attaque nucléophile de l'oxygène de la fonction alcool permettant d'obtenir une espèce protonée. La poursuite de la réaction conduit à une condensation entre la partie carbonée de la protéine, notamment de l'hémoglobine, et la fonction alcool et à l'obtention de la fonction ester aminé. Cette partie protéinique, notamment de l'hémoglobine, polycondensée par l'alcool (éthanol) permet de conférer à la molécule une liposolubilité qui permet l'obtention d'un mélange très homogène bien lisse (sans formation de grumeaux).

Selon ce premier mode de réalisation, le procédé peut présenter les étapes suivantes :
a) à l'hémoglobine en poudre on ajoute de l'éthanol de préférence dans des proportions 7/1,5 en masse et en homogénéise,
b) on ajoute à ce mélange quelques gouttes (3 à 4 gouttes d'acide, notamment acide sulfurique concentré ou dilué) et on homogénéise à nouveau. Quand on ajoute les gouttes acides, on doit observer un léger dégagement de fumée.
c) à ce mélange, on ajoute de l'éthanal, de préférence dans des proportions 7/1,5/1,5 (proportion en masse hémoglobine/éthanol/éthanal) et on mélange,
d) le mélange est ensuite placé dans un moule métallique qui est placé sur le plateau d'une thermopresse. En se rapprochant, les plateaux de la presse viennent comprimer le mélange qui se ramollit et prend la forme de l'empreinte,
e) le mélange est maintenu sous pression par exemple à 70°C entre 50 et 150 bars, par exemple 100 bars pendant le temps de la réaction de réticulation (de 2 à 6 minutes). Lorsque cette réaction de réticulation est terminée, les plateaux s'écartent afin de l'ôter et la pièce est dégagée.

Eventuellement, le mélange peut être effectué dans des ordres différents, soit dans l'ordre hémoglobine/éthanol/éthanal (H.E.A) tels que précédemment décrits, soit dans l'ordre hémoglobine/éthanal/éthanol (H.A.E). toutefois il est préférable, concernant la performance de déformation à la rupture du liant, d'ajouter l'éthanol avant l'éthanal comme nous le verrons dans les exemples.

Le procédé peut présenter, en outre, l'ajout de particules végétales (par exemple fibres, farine, granulats) ou/et minérales (par exemple vermiculite, talc, mica, fines siliceuses) avant la thermocompression pour obtenir des agrocomposites dans lesquels le mélange hémoglobine/éthanol-aldéhyde acétique réticulé fait office de liant. Bien entendu, un colorant peut être ajouté afin de colorer le produit fini.

Les produits obtenus sont des thermodurs (voir performances mécaniques des exemples illustrés aux tableaux 1 à 4). Ils résistent au feu, à l'eau et aux agents chimiques (alcool, acétone notamment). Les matériaux obtenus peuvent subir des traitements mécaniques après durcissement (sciage, fraisage).

La charge lignocellulosique peut notamment être choisie dans le groupe des coproduits céréaliers (par exemple pailles, issues de silos, menues pailles de céréales, balles) des produits du défibrage du lin ou du chanvre (par exemple anas de lin, chènevotte, poussières de battage) des pulpes de betteraves, des pailles ou menues pailles de colza ou tout autre coproduit lignocellulosique issu des activités agricoles ou poussant à l'état sauvage. La charge peut également provenir de l'exploitation forestière.

L'invention trouve une utilisation du procédé et du polymère notamment agromatériau dans le domaine de la construction, du transport, de l'emballage, de l'équipement électronique ou des technologies de communication (telles que par exemple support de puces, de circuits imprimés, de coques de téléphone ou autres appareils électroniques), du jouet, de l'ameublement.

Nous décrivons maintenant en détail différents exemples de l'invention pour laquelle la protéine est l'hémoglobine, l'alcool aliphatique est l'éthanol et l'aldéhyde est l'éthanal. Ces exemples sont numérotés 1 à 2 et 5 à 11. Les exemples numérotés 3, 4 et 12 ne font pas l'objet de l'invention de la présente demande. Ces exemples 3,4 et 12 ne sont toutefois pas connus de l'état de la technique, à la connaissance de l'inventeur. Ils ont pour objet d'illustrer l'effet de synergie entre l'alcool aliphatique, l'aldéhyde et la protéine, dans le procédé conforme à la présente demande, permettant l'obtention de polymères de performances mécaniques élevées. Les exemples 13 et 14 correspondent respectivement au remplacement de l'hémoglobine par la gélatine et la caséine dans l'exemple 1.

Les performances mécaniques des différents exemples sont illustrées aux tableaux 1 à 4.
Dans les tableaux 1 et 2 les abréviations suivantes sont utilisées :
- H représente l'hémoglobine,
- Gel représente la gélatine,
- Cas représente la caséine,
- E représente l'éthanol,
- A représente l'éthanal,
- AS représente l'acide sulfurique,
- FE représente des fibres non traitées,
- FM représente des fibres mercerisées,
- Fac représente des fibres acétylées, traitées par l'acide acétique,
- Fcap représente des fibres traitées par l'acide caprylique,
- Fver représente des fibres de verre,
- HEA indique que l'hémoglobine a été mélangée avec l'éthanol, avant ajout de l'éthanal,
- HAE indique que l'hémoglobine a été mélangée avec l'éthanal, avant ajout de l'éthanol,
- Gel/E/A indique que la gélatine a été mélangée avec l'éthanol avant l'ajout de l'éthanal,
- Cas/E/A indique que la caséine a été mélangée avec l'éthanol avant ajout de l'éthanal,
- HEA (X/Y/Z) indique X% d'hémoglobine, Y% d'éthanol et Z% d'éthanal (en masse).

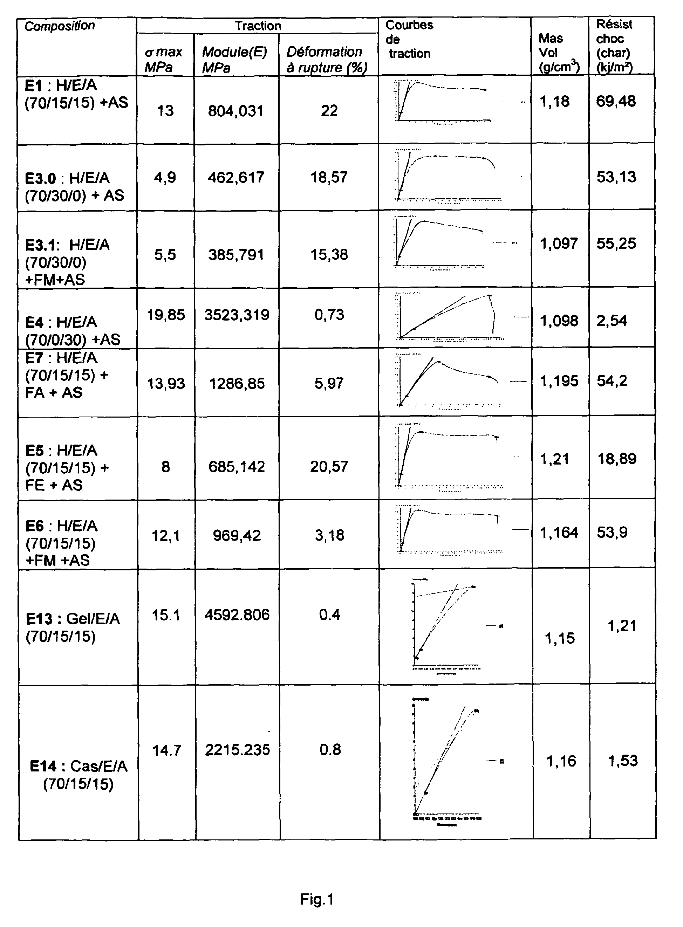

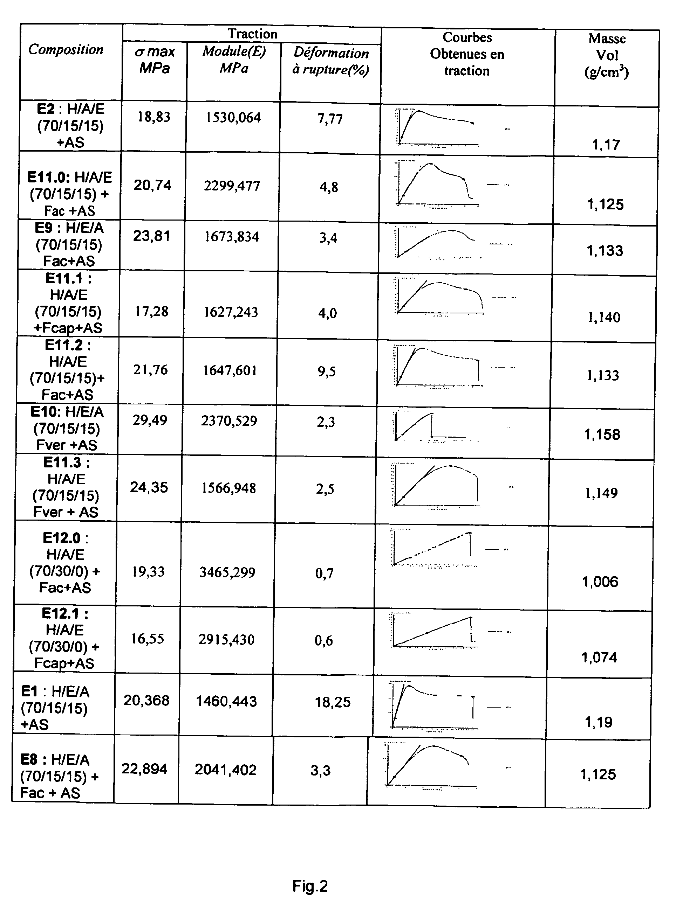

Les courbes de traction des figures 1 et 2 illustrent en ordonnée l'effort appliqué et en abscisse l'allongement.

### Exemple 1 (E1) :

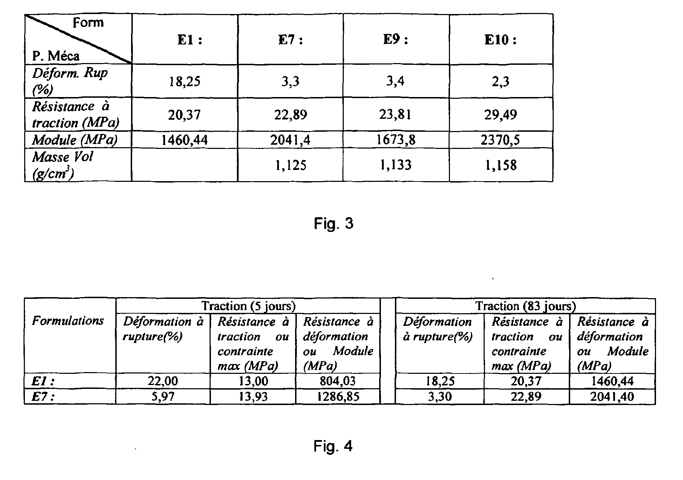

70 g d'hémoglobine pulvérulente sont mélangés à 15 g d'éthanol en présence d'acide sulfurique concentré (3 gouttes) suivant la procédure décrite précédemment. 15 g d'éthanal sont ensuite ajoutés et l'ensemble est soumis à une thermocompression (70°C, 100 bars) pendant 6 minutes. Les caractéristiques mécaniques obtenues à 5 jours (après thermocompression) sont données dans le tableau 1 de la figure 1. Tel qu'illustré au tableau 4 de la figure 4, le vieillissement améliore les caractéristiques mécaniques.

### Exemple 2 (E2) :

Les quantités massiques restant les mêmes que dans l'exemple 1, on ajoute tout d'abord l'éthanal puis l'éthanol, toujours en milieu acide. Les caractéristiques obtenues à 83 jours sont peu différentes sauf en ce qui concerne la déformation à la rupture, celle-ci est nettement plus faible lorsqu'on ajoute d'abord l'éthanal avant l'alcool.

### Exemple 3 (E3.0, E3.1) :

Cet exemple n'illustre pas l'invention. Afin d'apprécier toutefois les effets de l'éthanol seul avec l'hémoglobine (sans aldéhyde). Un mélange, de 70 g d'hémoglobine et de 30 g d'éthanol est ainsi préparé en présence de 3 gouttes d'acide sulfurique concentré, est soumis à un traitement en thermocompression identique à celui de l'exemple de la figure 1. On observe une chute de la résistance à la traction et du module d'élasticité. Par contre, la déformation à la rupture et la résistance aux chocs restent élevées (exemple E3.0 au tableau 1). On observe en présence de fibres mercerisées (exemple E.3.1) une légère diminution du module de traction et de l'allongement, ainsi qu'une légère augmentation de la continuité de traction et de la résistance au choc de charpy.

### Exemple 4 (E4) :

Cet exemple n'illustre également pas l'invention mais permet toutefois d'apprécier les effets de l'éthanal seul avec l'hémoglobine (sans alcool). Un mélange de 70 g d'hémoglobine et de 30 g d'éthanal est ainsi préparé en présence de 3 gouttes d'acide sulfurique concentré. Ce mélange est soumis à un traitement en thermocompression identique à celui de l'exemple de la figure 1. On observe une augmentation de la résistance à la traction et du module d'élasticité. Par contre, la déformation à la rupture et la résistance aux chocs diminuent considérablement (exemple E4 au tableau 1 de la figure 1).

### Exemple 5 (E5) :

Au mélange de l'exemple 1, on ajoute 2 g d'étoupes de lin non traitées (fibres unidirectionnelles). On observe une baisse de toutes les valeurs des grandeurs mécaniques étudiées (tableau 1).

### Exemple 6 (E6) :

Au mélange de l'exemple 1, on ajoute 2 g d'étoupes mercerisées (fibres en position orthogonale) suivant un procédé connu (action de NaOH sur la cellulose donnant lieu à une saponification). On observe peu d'actions sur les performances mécaniques si ce n'est une diminution importante de la déformation à la rupture (tableau 1).

### Exemple 7 (E7) :

Au mélange de l'exemple 1, on ajoute 2 g d'étoupes acétylées (fibres unidirectionnelles) suivant un procédé connu (action de l'anhydride acétique permettant de greffer un groupement acétyle sur les groupements OH des fibres végétales). Le module de traction est considérablement augmenté et la déformation à la rupture est environ 4 fois plus faible que dans l'exemple 1 (tableau 1).

### Exemple 8 (E8) :

Au mélange de l'exemple 1, on ajoute des étoupes acétylées (fibres en position orthogonale) par action de l'acide acétique. A 83 jours, la résistance à la traction augmente, le module est considérablement accru. Le matériau reste ductile mais la déformation à la rupture est divisée par 6 environ.

### Exemple 9 (E9) :

Au mélange de l'exemple 1, on ajoute des étoupes acétylées (fibres en position orthogonale) par action de l'acide caprylique. On constate, par rapport à une acétylation par l'acide acétique, une légère augmentation de la résistance à la traction mais une diminution du module. La déformation à la rupture reste sensiblement identique.

### Exemple 10 (E10) :

A titre comparatif, les étoupes sont remplacées par des fibres de verre tissées dans les mêmes proportions massiques (70 g d'hémoglobine, 15 g d'éthanol, 15 g d'éthanal, 3 gouttes d'acide sulfurique concentré, 2 g de fibres de verre). La résistance à la traction ainsi que le module d'élasticité augmentent. La déformation à la rupture diminue et la déformation plastique est considérablement réduite.

### Exemple 11 (E11.0, E11.1, E11.2, E11. 3) :

Les composants ayant été introduits dans l'ordre hémoglobine, aldéhyde, éthanol au lieu de hémoglobine, éthanol, aldéhyde, dans les mêmes proportions et en présence d'acide sulfurique concentré que l'exemple 1, on observe également en présence de fibres une augmentation de la résistance à la traction (E11.0, E11.2, E11.3), sauf dans le cas d'un traitement à l'acide caprylique (E11.1), une augmentation plus ou moins importante du module de traction, une diminution de la déformation à la rupture sauf dans le cas d'une acétylation par l'acide acétique (E11.2). Dans tous les cas, la déformation plastique existe.

### Exemple 12 (E12.0, E12.1) :

Cet exemple n'est pas représentatif de l'invention. On mélange 70 g d'hémoglobine et de 30 g d'éthanal, auquel on ajoute 3 gouttes d'acide sulfurique concentré. Ce mélange est additionné de fibres acétylées par différents réactifs. L'acétylation par l'anhydride acétique est la plus performante en ce qui concerne la résistance à la traction à 83 jours (E12.0). Les modules d'élasticité restent élevés même en ce qui concerne les produits fibrés par des étoupes traitées à l'acide caprylique (E12.1). Les déformations à la rupture restent faibles dans tous les cas. Le domaine plastique est quasi-inexistant.

Selon un autre mode de réalisation, la protéine peut être la caséine, l'alcool est l'éthanol et l'aldéhyde est l'aldéhyde acétique.

Selon un autre mode de réalisation, la protéine peut être la gélatine, l'alcool l'éthanol, l'aldéhyde est l'aldéhyde acétique.

Selon un autre mode de réalisation, l'aldéhyde peut être l'aldéhyde acétique et l'alcool le 2-propanol.

Naturellement, d'autres modes de réalisation auraient pu être envisagés sans pour autant sortir du cadre de l'invention définie par les revendications ci-après.

## Revendications

1. Procédé pour l'élaboration d'un agropolymère thermodurcissable dans lequel au moins:
- on mélange une protéine en poudre, un alcool aliphatique de formule R'OH et un aldéhyde aliphatique de formule RCOH, en milieu acide, R et R' étant indépendamment choisis parmi les radicaux alkyles ;
- on thermocompresse le mélange afin d'estérifier la ou les fonction(s) acide carboxylique terminale(s) de la protéine et de transformer la ou les fonction(s) amine terminale(s) de la protéine en imine.

2. Procédé selon la revendication 1, dans lequel la protéine est choisie parmi l'hémoglobine, la caséine, la gélatine.

3. Procédé selon la revendication 1 ou 2, dans lequel l'alcool aliphatique est choisi parmi l'éthanol, le propanol, le 2-propanol,

4. Procédé selon l'une des revendications 1 à 3, dans lequel l'aldéhyde aliphatique est choisi parmi l'aldéhyde acétique, le propanal, le butanal.

5. Procédé selon l'une des revendications 1 à 4, dans lequel on mélange d'abord la protéine avec l'alcool, puis on ajoute l'aldéhyde.

6. Procédé selon l'une des revendications 1 à 4, dans lequel on mélange d'abord la protéine avec l'aldéhyde, puis on ajoute l'alcool.

7. Procédé selon l'une des revendications 1 à 6, dans lequel la thermocompression est réalisée à une température comprise entre 60°C et 80°C, telle que par exemple 70°C.

8. Procédé selon l'une des revendications 1 à 7, dans lequel la thermocompression est réalisée à une pression comprise entre 50 bars et 150 bars, tel que par exemple 100 bars.

9. Procédé selon l'une des revendications 1 à 8, dans lequel la durée de l'étape de thermocompression est comprise entre 1 min et 10 min, plus particulièrement entre 2 min et 6 min.

10. Procédé selon l'une des revendications 1 à 9, dans lequel on ajoute au mélange une charge, minérale ou végétale, avant thermocompression du mélange.

11. Procédé selon la revendication 10, dans lequel la charge végétale est lignocellulosique, choisie dans le groupe des coproduits céréaliers, des produits de défibrage du lin ou du chanvre, des pulpes de betteraves.

12. Procédé selon l'une des revendications 1 à 11, dans les proportions en masse dans le mélange (protéine, alcool, aldéhyde) sont :
- protéine entre 60% et 80%, notamment 70%,
- alcool entre 10% et 20%, notamment 15%,
- aldéhyde entre 10% et 20%, notamment 15%.

13. Agropolymère thermodurcissable obtenu selon le procédé de l'une des revendications 1 à 12.

14. Utilisation du procédé selon l'une des revendications 1 à 12 ou du polymère selon la revendication 13 dans le domaine de la construction, du transport, de l'emballage, de l'électronique, de l'ameublement.

## Patentansprüche

1. Verfahren zur Herstellung eines duroplastischen Agropolymers, wobei zumindest:
- ein pulverförmiges Protein, ein aliphatischer Alkohol der Formel R'OH und ein aliphatischer Aldehyd der Formel RCOH in saurem Milieu vermischt werden, wobei R und R' unabhängig voneinander aus Alkylresten ausgewählt sind;
- die Mischung unter Wärmeeinwirkung komprimiert wird, um die endständige(n) funktionelle(n) Carbonsäuregruppe(n) des Proteins zu verestern und die endständige(n) funktionelle(n) Amingruppe(n) des Proteins in Imin umzuwandeln.

2. Verfahren nach Anspruch 1, wobei das Protein aus Hämoglobin, Kasein, Gelatine ausgewählt ist.

3. Verfahren nach Anspruch 1 oder 2, wobei der aliphatische Alkohol aus Ethanol, Propanol, 2-Propanol ausgewählt ist.

4. Verfahren nach einem der Ansprüche 1 bis 3, wobei der aliphatische Aldehyd aus Acetaldehyd, Propanal, Butanal ausgewählt ist.

5. Verfahren nach einem der Ansprüche 1 bis 4, wobei zunächst das Protein mit dem Alkohol vermischt wird, woraufhin der Aldehyd zugesetzt wird.

6. Verfahren nach einem der Ansprüche 1 bis 4, wobei zunächst das Protein mit dem Aldehyd vermischt wird, woraufhin der Alkohol zugesetzt wird.

7. Verfahren nach einem der Ansprüche 1 bis 6, wobei die Kompression unter Wärmeeinwirkung bei einer Temperatur im Bereich von 60°C bis 80°C durchgeführt wird, wie beispielsweise bei 70°C.

8. Verfahren nach einem der Ansprüche 1 bis 7, wobei die Kompression unter Wärmeeinwirkung bei einem Druck im Bereich von 50 bar bis 150 bar durchgeführt wird, wie beispielsweise bei 100 bar.

9. Verfahren nach einem der Ansprüche 1 bis 8, wobei die Dauer des Schrittes der Kompression unter Wärmeeinwirkung im Bereich von 1 min bis 10 min, insbesondere von 2 min bis 6 min, liegt.

10. Verfahren nach einem der Ansprüche 1 bis 9, wobei der Mischung vor dem Schritt, in welchem die Mischung einer Kompression unter Wärmeeinwirkung unterzogen wird, ein Füllstoff mineralischer oder pflanzlicher Art zugesetzt wird.

11. Verfahren nach Anspruch 10, wobei der pflanzliche Füllstoff lignocellulosehaltig ist und aus der Gruppe der Getreidenebenprodukte, der Produkte der Fasergewinnung aus Leinen oder Hanf, der Rübenpulpen ausgewählt ist.

12. Verfahren nach einem der Ansprüche 1 bis 11, wobei die Massenanteile in der Mischung (Protein, Alkohol, Aldehyd) folgendermaßen sind:
- Protein zwischen 60% und 80%, insbesondere 70%,
- Alkohol zwischen 10% und 20%, insbesondere 15%,
- Aldehyd zwischen 10% und 20%, insbesondere 15%.

13. Duroplastisches Agropolymer, das gemäß dem Verfahren nach einem der Ansprüche 1 bis 12 hergestellt wurde.

14. Verwendung des Verfahrens nach einem der Ansprüche 1 bis 12 oder des Polymers nach Anspruch 13 im Bereich des Bauwesens, des Verkehrs, der Verpackungen, der Elektronik, der Einrichtungsgegenstände.

## Claims

1. Method for preparing a thermosetting agropolymer wherein at least:
- a protein powder, an aliphatic alcohol having the formula R'OH and an aliphatic aldehyde having the formula RCOH are mixed, in an acidic medium, R and R' being chosen independently from the alkyl radicals:
- the mixture is thermocompressed to esterify the terminal carboxylic acid function(s) of the protein and convert the terminal amine function(s) of the protein into imine.

2. Method according to claim 1, wherein the protein is chosen from haemoglobin, casein or gelatin.

3. Method according to claim 1 or 2, wherein the aliphatic alcohol is chosen from ethanol, propanol or 2-propanol.

4. Method according to any of claims 1 to 3, wherein the aliphatic aldehyde is chosen from acetic aldehyde, propanal or butanal.

5. Method according to any of claims 1 to 4, wherein the protein is first mixed with the alcohol, and the aldehyde is then added.

6. Method according to any of claims 1 to 4, wherein the protein is first mixed with the aldehyde, and the alcohol is then added.

7. Method according to any of claims 1 to 6, wherein the thermocompression is performed at a temperature between 60°C and 80°C, such as for example 70°C.

8. Method according to any of claims 1 to 7, wherein the thermocompression is performed at a pressure between 50 bar and 150 bar, such as for example 100 bar.

9. Method according to any of claims 1 to 8, wherein the duration of the thermocompression step is between 1 min and 10 min, more specifically between 2 min and 6 min.

10. Method according to any of claims 1 to 9, wherein a mineral or plant-based filler is added to the mixture, before thermocompressing the mixture.

11. Method according to claim 10, wherein the plant-based filler is lignocellulosic, chosen from the group of cereal by-products, flax or hemp defibring by-products, or beet pulp.

12. Method according to any of claims 1 to 11, wherein the proportions by mass in the mixture (protein, alcohol, aldehyde) are:
- protein between 60% and 80%, notably 70%,
- alcohol between 10% and 20%, notably 15%,
- aldehyde between 10% and 20%, notably 15%.

13. Thermosetting agropolymer obtained using the method according to any of claims 1 to 12.

14. Use of the method according to any of claims 1 to 12 or of the polymer according to claim 13 in the field of construction, transport, packaging, electronics or furniture.
